# EUROPÄISCHE PATENTSCHRIFT

(11) **EP 0 925 984 B1**
(45) Veröffentlichungstag und Bekanntmachung des Hinweises auf die Patenterteilung: **09.07.2003**
(21) Anmeldenummer: 98811169.6
(22) Anmeldetag: 26.11.1998
(51) Int. Cl.: B60K 13/04, F01N 7/08, F01N 7/18

(54) **Abgasanlage für ein Kraftfahrzeug sowie Kraftfahrzeug mit einer Abgasanlage**
Exhaust system for a motor vehicle, as well as motor vehicle with an exhaust system
Système d'échappement pour véhicule automobile ainsi que véhicule automobile avec système d'échappement

(30) Priorität: 17.12.1997 CH 289597
(43) Veröffentlichungstag der Anmeldung: 30.06.1999
(73) Patentinhaber: SCAMBIA INDUSTRIAL DEVELOPMENTS AKTIENGESELLSCHAFT, 9494 Schaan (LI)
(72) Erfinder: Steenackers, Pieter Delfina, Dr., 3030 Heverlee (BE); Alexnat, John W. Jörg, 3700 Tongeren (BE)
(74) Vertreter: Eder, Carl E.

(56) Entgegenhaltungen:
- EP-A- 0 807 749
- DE-A- 2 803 270
- DE-A- 4 207 193
- US-A- 4 182 121

## Beschreibung

Die Erfindung betrifft eine Abgasanlage für ein Kraftfahrzeug. Die Abgasanlage ist zum Beispiel für einen Personenkraftwagen vorgesehen, kann jedoch eventuell auch für ein anderes Kraftfahrzeug - zum Beispiel einen Lastkraftwagen oder Bus - verwendet werden. Der Verbrennungsmotor des Fahrzeugs kann aus einem Benzin- oder Dieselmotor bestehen und eine um eine Motor-Drehachse drehbare, normalerweise als Kurbelwelle ausgebildete Motorwelle aufweisen.

Die Verbrennungsmotoren von bekannten Kraftfahrzeugen besitzen ein Motorgehäuse, das ein wenig beweglich und schwingungsdämpfend am Fahrzeugkörper gehalten ist. Bekannte Auspuffe haben einen starr mit dem Motorgehäuse verbundenen Auspuffabschnitt, der über mindestens ein flexibles Leitungselement mit mindestens einen stromabwärts von diesem angeordneten, ein Gehäuse aufweisenden Katalysator und/oder Schalldämpfer verbunden ist. Das bzw. jedes Leitungselement definiert eine Leitungselement-Achse und besitzt häufig einen Wellenbalg. Es sei hierzu zum Beispiel auf die gattungsgemäße EP 0 807 749 A verwiesen.

Der Verbrennungsmotor erzeugt bei schnellen Last- bzw. Leistungsänderungen Verschwenkungen des Motorgehäuses. Diese Verschwenkungen verursachen bei bekannten Abgasanlagen meistens nicht nur Biegungen, sondern gleichzeitig auch abwechselnd axiale Kompressionen und Dehnungen sowie insbesondere auch Torsionen und Scherungen der Wellenbälge. Durch Torsionen und/oder Scherungen wird jedoch die Lebensdauer eines Wellenbalgs drastisch verkürzt. Die nachteilige Wirkung der Torsionen und Scherungen wird durch die häufig gleichzeitig stattfindenden, starken und schnellen Längenänderungen eines Wellenbalgs noch verstärkt.

Die DE 42 07 193 A offenbart ein Kraftfahrzeug mit einem Fahrzeugskörper sowie einem Verbrennungsmotor, der eine quer zum Fahrzeug verlaufende Kurbelwelle hat und mit einem Auspuff verbunden ist. Der Auspuff hat einen Auspuffkrümmer, einen Katalysator und drei flexible Leitungselemente, von denen zwei zwischen dem Sammelrohr des Auspuffkrümmers sowie dem Katalysator und eine beim Ausgang des Katalysators angeordnet ist. Jedes flexible Leitungselement hat ein Gelenk mit zwei Verbindungsteilen, die mit Gleitflächen aufeinander aufliegen und durch einen Bolzen sowie eine Feder gegeneinander gedrückt werden. Beim zuerst beschriebenen Ausführungsbeispiel ist der Auspuff zudem stromaufwärts von den drei flexiblen Leitungselementen, nämlich bei dem den Ausgang des Auspuffkrümmers bildenden Sammelrohr, durch einen Halter mit einem Kraftübertragungsblock verbunden, der den Motor, das Getriebe und das Vorderachsendifferential umfasst. Der Kraftübertragungsblock kann beim Betrieb Verschwenkungen um eine Trägheitsachse bzw. virtuelle Schwenk-Achse ausführen, die zur Drehachse der Kurbelwelle parallel und also offenbar rechtwinklig zur Längsrichtung des Kraftfahrzeugs ist.

Solche flexiblen Leitungselemente mit gegeneinander gedrückten Gleitflächen haben die Nachteile, dass sie bei Bewegungen häufig störende Geräusche verursachen und stark abgenutzt werden, so dass sie nur eine relativ kurze Lebensdauer haben. Zudem sind die beiden Verbindungsteile dieser flexiblen Leitungselemente für sich allein starr und haben je eine unveränderliche Länge. Wenn die beiden Verbindungsteile von einem solchen gelenkartigen Leitungselement beispielsweise je starr mit einem Rohr verbunden sind und von einem ungefähr gestreckten Zustand in einen (stärker) abgewinkelten Zustand oder umgekehrt verschwenkt werden, ändern daher die Abstände der einander abgewandten Enden der genannten Rohre. Dies hat in der Praxis zur Folge dass die stromabwärts von einem flexiblen Leitungselement angeordneten Auspuffteile bei Verschwenkungen des Motors um die Trägheitsachse bzw. virtuelle Schwenk-Achse ziemlich weit hin und her verschoben werden. Die DE 42 07 193 A offenbart kein Haltemittel, um den Auspuff stromabwärts von den flexiblen Leitungselementen zu halten. Falls dennoch solche Haltemittel vorgesehen würden, würden die grossen Hin- und Herverschiebungen der stromabwärts von den flexiblen Leitungselementen angeordneten Auspuffteile einer relativ unbeweglichen Verbindung dieser Auspuffteile mit dem Fahrzeugkörper entgegen stehen. Die grossen Hin- und Herverschiebungen der stromabwärts von den flexiblen Leitungselementen angeordneten Auspuffteile haben daher die Nachteile zur Folge, dass diese Auspuffteile und insbesondere Rohre sowie Gehäuse-Mäntel sehr stabil ausgebildet werden müssen und entsprechend schwer sind.

Der Erfindung liegt daher die Aufgabe zugrunde, eine Abgasanlage zu schaffen, die Nachteile der bekannten Abgasanlagen behebt und insbesondere auch bei starken Verschwenkungen des Motorgehäuses eine lange Lebensdauer des bzw. jedes flexiblen Leitungselements sowie eine leichte Bauweise der stromabwärts des mindestens einen flexiblen leitungselements angeordneten Auspuffteile ermöglicht.

Die Aufgabe wird gemäss der Erfindung durch eine Abgasanlage mit den Merkmalen des Anspruchs 1 gelöst.

Die Erfindung betrifft ferner ein Kraftfahrzeug gemäss dem Anspruch 8.

Vorteilhafte Ausgestaltungen des Erfindungsgegenstands gehen aus den abhängigen Ansprüche hervor.

Beim Betrieb des Verbrennungsmotors verursachen schnelle Laständerungen, schnelle Änderungen der Drehzahl der Motorwelle und/oder des von dieser abgegebenen Drehmoments schnelle Änderungen der Leistung des Verbrennungsmotors. Diese verursachen ihrerseits Drehungen und/oder Verschwenkungen des Motorgehäuses um eine virtuelle Dreh- und/oder Schwenk-Achse. Zudem können die Vibrationen eventuell auch noch Dreh-Schwingungen bzw. periodische Schwenkbewegungen des Motorgehäuses um die virtuelle Achse verursachen. Die Lage und Richtung der virtuellen Achse sind von der Ausbildung des Verbrennungsmotors und der Ausbildung sowie Anordnung der Haltemittel abhängig, mit denen der Verbrennungsmotor am Fahrzeugkörper gehalten ist. Die virtuelle Achse kann eventuell zur Motor-Drehachse parallel sein und sogar mit dieser zusammenfallen, ist aber meistens ein wenig schief zur Motor-Drehachse und bildet dann mit dieser einen kleinen Winkel. Dieser Winkel beträgt typischerweise ungefähr 5° bis 15°. Ferner können die virtuelle Achse und die Motor-Drehachse einander schneiden, sind aber häufig derart gegeneinander versetzt, dass sie einander nicht schneiden. Die Lage und die Richtung der virtuellen Achse können eventuell ferner ein wenig von der momentanen Motor-Leistung - d.h. von der Drehzahl und/oder dem Drehmoment der Motorwelle - abhängen und also für verschiedene Betriebszustände verschieden sein. Die Lage und Richtung der virtuellen Achse können des weiteren für verschiedene Kraftfahrzeuge des gleichen Typs wegen Fabrikationstoleranzen von Fahrzeug zu Fahrzeug etwas variieren.

Der Auspuff wird vorzugsweise derart ausgebildet, dass die Leitungselement-Achse des bzw. jedes flexiblen Leitungselements in mindestens einem Zustand des Leitungselements gerade oder höchstens geringfügig in einer Ebene gebogen ist. Beim Entwerfen und Konstruieren einer Abgasanlage für Kraftfahrzeuge eines bestimmten Typs kann man beispielsweise zuerst experimentell eine mittlere und/oder durchschnittliche Lage sowie eine mittlere und/oder durchschnittliche Richtung der virtuellen Achse für den vorgesehenen Motor-Leistungsbereich - d.h. Drehzahl- und/oder Drehmomentbereich der Motorwelle - und für einige Kraftfahrzeuge des betreffenden Typs ermitteln. Die Abgasanlage wird dann derart ausgebildet, dass die Leitungselement-Achse des mindestens einen flexiblen Leitungselements in mindestens einem Zustand des Kraftfahrzeugs, Verbrennungsmotors, Auspuffs und flexiblen Leitungselements möglichst genau rechtwinklig zur virtuellen Achse ist und dementsprechend meistens einen von 90° verschiedenen Winkel mit der Motor-Drehachse bildet. Die von dem bzw. einem Leitungselement definierte, normalerweise in mindestens einem Zustand gerade Leitungselement-Achse kann die virtuelle Achse eventuell schneiden, tut dies aber in den meisten Fällen nicht.

Bei dem im vorgängigen Absatz genannten, mindestens einen Zustand kann es sich beispielsweise um einen Zustand handeln, bei dem das Kraftfahrzeug sowie der Verbrennungsmotor stillstehen und der letztere sowie der Auspuff kalt sind. Es kann sich jedoch beispielsweise auch um einen Zustand handeln, in dem das Kraftfahrzeug stillsteht oder mit konstanter Geschwindigkeit geradeaus fährt, der Verbrennungsmotor und der Auspuff normale Betriebstemperatur haben und der Verbrennungsmotor eine konstante Leistung, beispielsweise die Leerlauf-Leistung oder eine mittlere Leistung abgibt und die Drehzahl der Motorwelle sowie das von dieser abgegebene Drehmoment konstant sind.

Die Leitungselement-Achse des mindestens einen Leitungselements bildet mit der sich in einem (vorgesehenen) Betriebszustand des Verbrennungsmotors ergebenden, virtuellen Achse einen Winkel, der gemäss der Erfindung mindestens dann 85° bis 95° beträgt, wenn das (betreffende) Leitungselement diejenige Form und Lage hat, die es in mindestens einem Zustand der vorgängig erwähnten Art einnimmt. Bei einer vorteilhaften Ausgestaltung des Erfindungsgegenstandes beträgt der genannte Winkel 87° bis 93°, noch besser 89° bis 91° und also eben möglichst genau 90°. Falls die Leitungselement-Achse im betrachteten Zustand gekrümmt sein sollte, gelten diese für den Winkel genannten Bedingungen in bezug auf die tagentiale Richtung der Leitungselement-Achse bei einer sich mindestens annähernd in der Mitte dieser Achse befindenden Stelle und vorzugsweise bei jeder beliebigen Stelle dieser Achse. Wenn das Motorgehäuse beim Betrieb Verschwenkungen um die virtuelle Achse ausführt, wird das bzw. jedes flexible Leitungselement durch diese Bewegungen mindestens annähernd ausschliesslich in und/oder entlang einer ungefähr zur virtuellen Achse rechtwinkligen Ebene deformiert. Das bzw. jedes flexible Leitungselement wird durch die Verschwenkungen des Motorgehäuses gebogen und eventuell auch noch ein wenig zusammengedrückt und/oder gedehnt. Dagegen bewirken die Schwenkbewegungen des Motorgehäuses keine oder mindestens praktisch keine Torsion und keine Scherung des flexiblen Leitungselements. Wellenbälge und auch andersartige flexible Leitungselemente können ohne weiteres viele Biegungen ohne Schaden aushalten. Durch die Vermeidung von Torsions- und Scherbeanspruchungen wird daher eine hohe Lebensdauer des bzw. jedes flexiblen Leitungselements erzielt.

Die erfindungsgemässe Abgasanlage ist insbesondere sehr gut für ein Kraftfahrzeug geeignet, dessen Motor-Drehachse quer zur Längsrichtung und/oder zur Haupt-Fahrrichtung des Kraftfahrzeugs verläuft. Die virtuelle Achse bildet mit der Längsrichtung des Kraftfahrzeugs dann einen Winkel, der häufig ein wenig, beispielsweise 5° bis 15°, von 90° abweicht.

Der Auspuff weist vorzugsweise ein erstes und ein zweites flexibles Leitungselement auf, die über ein Rohr im wesentlichen starr miteinander verbunden sind. Die Leitungselement-Achsen der beiden Leitungselemente können dann entweder in verschiedenen, voneinander im Abstand stehenden, mindestens annähernd zur virtuellen Achse rechtwinkligen Ebene oder in einer gemeinsamen, mindestens annähernd zur virtuellen Achse rechtwinklige Ebene liegen.

Das bzw. jedes stromabwärts von dem oder den flexiblen Leitungselement(en) angeordnete, zu einem Katalysator und/oder Schalldämpfer gehörenden Gehäuse ist vorzugsweise durch Haltemittel mit mindestens teilweise gummielastischen Verbindungsorganen ein wenig beweglich und federnd, aber doch ziemlich starr am Fahrzeugkörper gehalten. Die zum Halten des bzw. jedes solchen Gehäuses dienenden Verbindungsorgane sind vorzugsweise derart ausgebildet, dass sie bei kleinen Deformationen relativ nachgiebig sind und daher eine gute Schwingungsdämpfung ergeben. Die Haltemittel und deren Verbindungsorgane sind dabei derart ausgebildet, dass das erste stromabwärts von dem oder den flexiblen Leitungselement(en) angeordnete Gehäuse bei zusammengebautem Auspuff und/oder in vom restlichen Auspuff getrenntem Zustand durch eine auf das Gehäuse einwirkende, konstante Kraft von 100 N in jeder beliebigen Richtung bezüglich des Fahrzeugkörpers gemäss der Erfindung höchstens 5 mm und vorzugsweise höchstens 2 mm und beispielsweise höchstens 1 mm aus einer Mittel- und/oder Ruhelage ausgelenkt wird. Eine auf das Gehäuse einwirkende, konstante Beschleunigung von 10 m/s² oder beispielsweise auch noch 20 m/s² oder sogar 50 m/s² verursacht dann bei zusammengebautem Auspuff und/oder bei vom restlichen Auspuff getrenntem Gehäuse vorzugsweise ebenfalls nur höchstens eine Auslenkung in der genannten Grösse. Dies trägt dazu bei, Torsionen- und Scherungen des bzw. jedes stromaufwärts vom Gehäuse angeordneten, flexiblen Leitungselements klein zu halten und mindestens weitgehend oder praktisch vollständig zu vermeiden. Zudem ermöglicht die relativ starre Verbindung des bzw. jedes Gehäuses mit dem Fahrzeugkörper, den Auspuff dünnwandig sowie leicht auszubilden.

Der Erfindungsgegenstand wird anschliessend anhand in der Zeichnung dargestellter Ausführungsbeispiele erläutert. In der Zeichnung zeigt
Fig 1 ein schematisch, teils in Ansicht, teils im Schnitt gezeichnetes Kraftfahrzeug mit einer Abgasanlage,
Fig. 2 einen Ausschnitt aus Fig. 1 in grösserem Massstab,
Fig. 3 einen schematischen Grundriss von einem Teil des Kraftfahrzeuges und der Abgasanlage,
Fig. 4 ein teils in Ansicht, teils im Axialschnitt dargestelltes, flexibles Leitungselement der Abgasanlage,
Fig. 5 eine Endansicht des ersten Schalldämpfers der Abgasanlage,
Fig. 6 einen Schnitt durch einen zum Halten des ersten Schalldämpfers dienenden Halters entlang der Linie VI- VI der Fig. 5 in grösserem Massstab als diese, und
Fig. 7 einen zur Fig. 2 analogen Ausschnitt aus einem Kraftfahrzeug mit einer anderen Abgasanlage.

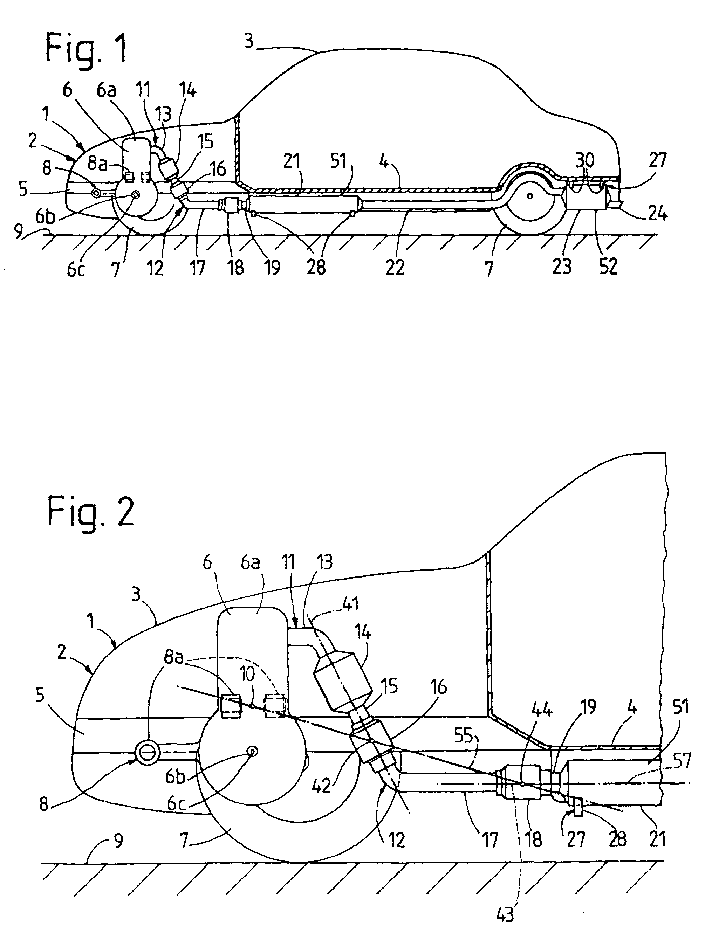

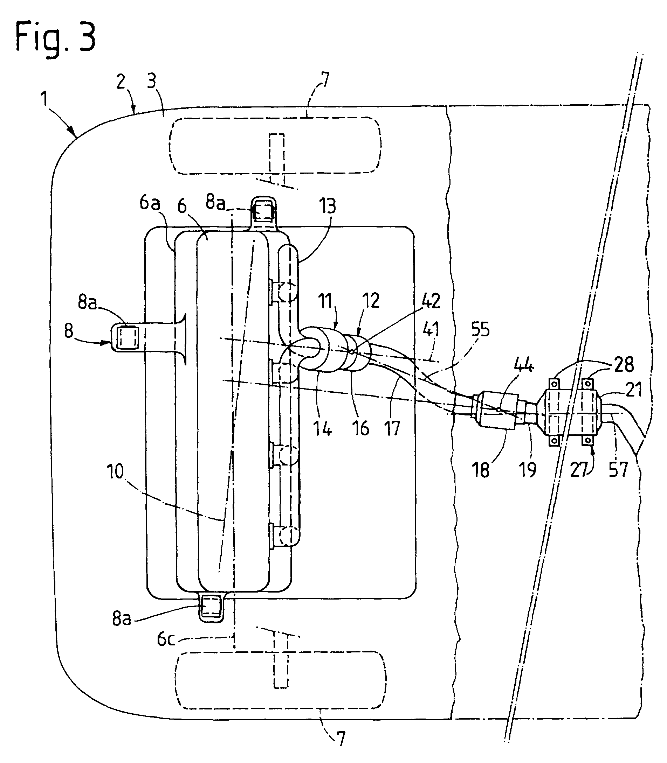

Das schematisch in Fig. 1 und zum Teil in den Figuren 2 sowie 3 gezeichnete Kraftfahrzeug 1 besteht aus einem Personenkraftwagen und besitzt einen Fahrzeugkörper 2. Dieser weist eine beispielsweise selbsttragende Karosserie 3, einen Fahrzeugboden 4 und eventuell noch ein Gestell 5 auf. Der Fahrzeugkörper 2 hält einen Verbrennungsmotor 6 und Räder 7. Der Verbrennungsmotor 6 besitzt ein Motorgehäuse 6a und eine Motorwelle 6b, nämlich eine Kurbelwelle. Diese ist um eine Motor-Drehachse 6c drehbar. Das Motorgehäuse 6a ist mit Haltemitteln 8 ein wenig beweglich, federnd und schwingungsdämpfend am Gestell 5 gehalten. Die Haltemittel 8 weisen mindestens drei an verschiedenen Stellen des Motorgehäuses befestigte Halter 8a auf, von denen jeder mindestens einen Gummikörper oder dergleichen besitzt. Das Motorgehäuse 6a hat mehrere Abgasauslässe, von denen jeder einem Zylinder des Motors zugeordnet ist. Das Kraftfahrzeug 1 steht mit seinen Rädern auf einer horizontalen Fahr-Ebene 9. Die Motor-Drehachse 6c ist rechtwinklig zur Fahrzeug-Längsrichtung sowie parallel zur Fahr-Ebene 9 und also normalerweise ungefähr horizontal. Leistungsänderungen beim Betrieb des Verbrennungsmotors 6 erzeugen Verschwenkungen des Motorgehäuses um eine virtuelle Dreh- und/oder Schwenk-Achse 10. Diese ist beispielsweise gegen die Motor-Drehachse 6c versetzt und bildet mit der Motor-Drehachse 6c beispielsweise einen Winkel von ungefähr 5° bis 15°. Zur Vereinfachung der zeichnerischen Darstellung wurde angenommen, dass die virtuelle Dreh- und/oder Schwenk-Achse 10 parallel zur Fahr-Ebene, also normalerweise horizontal ist. Es sei jedoch angemerkt, dass die virtuelle Achse auch einige Grad gegen die Fahr-Ebene 9 geneigt sein kann.

Das Kraftfahrzeug besitzt eine Abgasanlage 11 mit einem Auspuff 12. Dieser weist in der Strömungsrichtung des Abgases der Reihe nach eine Einlass- und Sammelvorrichtung 13, mindestens einen Katalysator 14, eine Verbindung 15, ein erstes deformierbares, insbesondere flexibles Leitungselement 16, ein gebogenes Rohr 17, ein zweites deformierbares, insbesondere flexibles Leitungselement 18, eine eventuell ein kurzes Rohr aufweisende Verbindung 19, einen ersten Schalldämpfer 21, ein relativ langes, gebogenes Rohr 22, einen zweiten Schalldämpfer 23 und einen durch ein Rohr 24 gebildeten, in die Umgebung mündenden Auslass auf. Der Verbrennungsmotor 6 befindet sich beim vorderen Ende des Kraftfahrzeugs 1. Der Auspuff 12 verläuft vom Verbrennungsmotor 6 zum Heck des Fahrzeugs und befindet sich zu einem grossen Teil unterhalb des Fahrzeugbodens 4. Zur Abgasanlage 11 gehören ferner Haltemittel 27. Diese weisen vier Halter 28, 30 auf, welche die beiden Schalldämpfer 21 bzw. 23 in der Nähe von deren Enden mit einem starren Teil des Fahrzeugkörpers 2, nämlich mit dem Fahrzeugboden 4 verbinden.

Die Einlass- und Sammelvorrichtung 13 besitzt einen nur vereinfacht gezeichneten Auspuffkrümmer mit mehreren Einlassrohren von denen jedes mit einem Abgasauslass des Motorgehäuses 6a verbunden ist. Die Vorrichtung 13 besitzt ferner die Ausgänge der Einlassrohre miteinander verbindende Sammelverbindungsmittel und einen für alle Einlassrohre gemeinsamen Ausgang. Die Einlass- und Sammelvorrichtung 13 ist beispielsweise vollständig starr oder mindestens derart ausgebildet, dass der gemeinsame Ausgang starr mit dem Motorgehäuse 6a verbunden ist. Der Katalysator 14 hat ein starres Gehäuse mit einem Eingang, der starr mit dem gemeinsamen Ausgang der Einlass- und Sammelvorrichtung 13 verbunden ist. Die Rohre 17, 22, 24 und die allenfalls bei den Verbindungen 15, 19 vorhandenen Rohre sind starr. Die Einlass- und Sammelvorrichtung 13, das Gehäuse des Katalysators 14, die Rohre 17, 22, 24 und die Verbindungen 15, 19 bestehen aus metallischen Materialien, beispielsweise rostfreiem Stahl. Die aufeinanderfolgenden Teile 13 bis 24 des Auspuffs sind dicht miteinander verbunden.

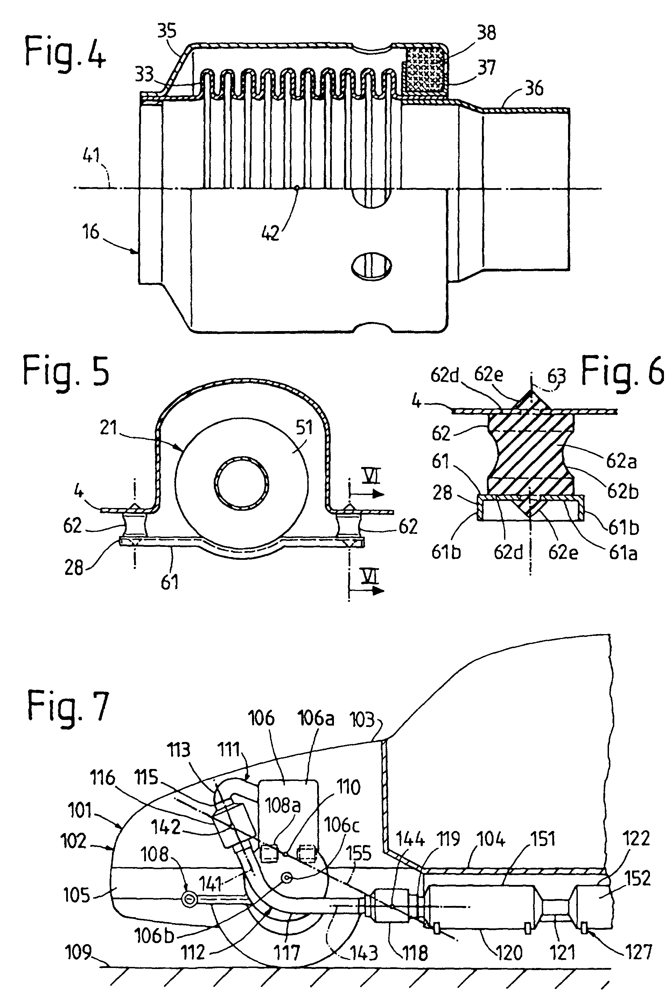

Die beiden Leitungselemente 16, 18 sind derart elastisch deformierbar, dass sie unter einer elastischen Deformation gebogen werden können und dass auch die Längen der Leitungselemente 16, 18 unter einer elastischen Deformation geändert - d.h. vergrössert oder verkleinert - werden können. Das erste der beiden in den Figuren 1, 2 und 3 nur schematisch dargestellten, elastisch deformierbaren, flexiblen Leitungselemente 16, 18 ist separat in Fig. 4 ersichtlich und besitzt als deformierbaren Teil einen flexiblen Wellenbalg 33. Das Leitungselement 16 hat ferner eine den Wellenbalg im Querschnitt umschliessende Hülse 35, einen Stutzen 36, einen im Querschnitt ungefähr U-förmigen Ring 37 mit einer gegen aussen offenen Rinne und ein in dieser gehaltenes, deformierbares Dämpfungsorgan 38. Dieses ist durch ein mehrlagiges, zu einem Ring mit vollem Querschnitt geformten Drahtgewebe gebildet und ragt aussen aus der Rinne des Rings 37 hinaus. Die genannten Teile des flexiblen Leitungselements 16 bestehen aus metallischen Materialien, beispielsweise rostfreiem Stahl. Der Wellenbalg 33 hat an beiden Enden einen zylindrischen Endabschnitt und ist an seinem sich in der Fig. 4 links befindenden Ende starr sowie dicht mit dem Ende der Hülse 35 verbunden, nämlich verschweisst. Diese Enden des Wellenbalgs 33 und der Hülse bilden zusammen den ersten Anschluss - nämlich den Eingang - des Leitungselements 16. Das sich in der Fig. 4 rechts befindende Ende des Wellenbalgs ist fest und dicht mit dem weiteren Endabschnitt des Stutzens 36 und mit dem Ring 37 verbunden, nämlich verschweisst. Der andere, engere Endabschnitt des Stutzens 36 bildet den zweiten Anschluss - nämlich den Ausgang - des Leitungselements. Die Hülse 35 hat einen zylindrischen Mittelabschnitt, der durch einen Zwischenraum von den äusseren Wellenscheiteln des Wellenbalgs getrennt ist und einige Löcher aufweist. Der sich in der Fig. 4 rechts befindende Endabschnitt der Hülse 35 ist nach innen abgebogen und umgreift einen Abschnitt des Dämpfungsorgans 38. Das erste Leitungselement 16 ist in undeformiertem, entspanntem Zustand gerade, definiert dann eine gerade Leitungselement-Achse 41 und ist im allgemeinen rotationssymmetrisch zu dieser. Das erste flexible Leitungselement 16 definiert mindestens ungefähr ein Leitungselement-Zentrum 42, das auf der Achse 41 liegt und sich beispielsweise in der Mitte des flexiblen, gewellten Abschnitts des Wellenbalgs 33 befindet. Die Hülse 35 schützt den Wellenbalg 33 gegen von aussen kommende, mechanische Einwirkungen und begrenzt zusammen mit den Teilen 36, 37, 38 die Deformationen, d.h. die Biegungen, Verlängerungen sowie Verkürzungen des Wellenbalgs. Das Leitungselement 16 ist beispielsweise derart ausgebildet, dass es mindestens 5° gebogen werden kann.

Das zweite, elastisch deformierbare, flexible Leitungselement 18 ist gleich oder ähnlich wie das erste Leitungselement ausgebildet und definiert eine Leitungselement-Achse 43 und mindestens ungefähr ein Leitungselement-Zentrum 44.

Der erste Schalldämpfer 21 weist das erste stromabwärts von den flexiblen Leitungselementen 16, 18 angeordnete Gehäuse 51 und der zweite Schalldämpfer 23 das zweite in bezug auf die Abgas-Strömungsrichtung nach den flexiblen Leitungselementen angeordnete Gehäuse 52 auf.

Die Abgasauslässe des Motorgehäuses 6a befinden sich auf der dem Fahrzeug-Heck zugewandten Seite des Motorgehäuses. Die beiden flexiblen Leitungselemente 16, 18 befinden sich auf der sich näher beim Fahrzeug-Heck befindenden Seite einer zur Fahr-Ebene 9 senkrechten, durch die virtuelle Achse 10 verlaufenden Ebene. Die flexiblen Leitungselemente 16, 18 haben in mindestens einem Zustand der in der Einleitung erwähnten Arten mindestens annähernd und vorzugsweise genau gerade Leitungselement-Achsen 41, 43. Die beiden Leitungselement-Achsen 41, 43 sind dann beispielsweise derart schief zur virtuellen Achse 10, dass sie diese nicht kreuzen. Die beiden Leitungselement-Achsen 41, 43 sind jedoch mindestens in einem Zustand mindestens annähernd und nämlich möglichst genau rechtwinklig zur virtuellen Achse 10. Jede Leitungselement-Achse 41, 43 liegt dementsprechend mindestens annähernd in einer zur virtuellen Achse 10 rechtwinkligen Ebene. Die beiden Leitungselement-Achsen liegen zum Beispiel gemäss der Fig. 3 in verschiedenen, voneinander in Abstand stehenden, zur virtuellen Achse rechtwinkligen Ebenen, so dass die beiden Leitungselement-Achsen einander nicht kreuzen. Das erste flexible Leitungselement 16 ist von der Verbindung 15 und seinem Eingang wegen nach unten gerichtet, so dass die Leitungselement-Achse 41 einen Winkel mit der Fahr-Ebene 9 bildet und gegen diese geneigt oder senkrecht zu dieser ist. Die Leitungselement-Achse 43 des zweiten Leitungselements 18 ist beispielsweise ungefähr parallel zur horizontalen Fahr-Ebene 9 oder bildet mit dieser höchstens einen kleinen Winkel. Die beiden beispielsweise mindestens in einem Zustand geraden Leitungselement-Achsen 41, 43 bilden vorzugsweise einen Winkel miteinander, der beispielsweise mindestens 30° beträgt. In den Figuren 2 und 3 ist noch eine Leitungselemente-Verbindungsgerade 55 eingezeichnet. Diese verläuft bei kaltem, stillstehendem Verbrennungsmotor sowie kaltem Auspuff und/oder wenn der Motor sowie der Auspuff die Betriebstemperaturen aufweisen und wenn sich das Motorgehäuse in einer mittleren Schwenkstellung befindet, durch die beiden Leitungselemente 16, 18, nämlich zum Beispiel mindestens annähernd durch deren Zentren 42, 44 und kreuzt ferner mindestens annähernd die virtuelle Achse 10 des Verbrennungsmotors. Die Leitungselemente-Verbindungsgerade 55 ist beispielsweise gegen die Fahr-Ebene geneigt und/oder kann zum Beispiel im Grundriss einen Winkel mit der Fahrzeug-Längsrichtung bilden. Die beiden Zentren 42, 44 liegen auf der Geraden 55 auf der gleichen Seite der virtuellen Achse 10.

Der Fahrzeugboden 4 ist im allgemeinen mehr oder weniger eben, hat jedoch einen in Fig. 5 ersichtliche, nach oben ragende, in der Fahrzeug-Längsrichtung verlaufender Ausbuchtung, den sogenannten Tunnel. Dieser enthält beispielsweise mindestens einen Teil des Auspuffs 12, insbesondere mindestens einen Querschnittbereich des auch in Fig. 5 ersichtlichen, ersten Schalldämpfers 21 und eventuell auch noch eine nicht gezeichnete Welle. Das zum ersten Schalldämpfer 21 gehörende, erste Gehäuse 51 definiert eine erste Gehäuse-Achse 57. Diese verläuft parallel zur Fahrzeug-Längsrichtung. Die Leitungselement-Achse 43 des zweiten flexiblen Leitungselements 18 bildet beispielsweise einen Winkel mit der Gehäuse-Achse 57.

Das erste Gehäuse 51 des ersten Schalldämpfers 21 besitzt eine dichte Wandung mit einem im wesentlichen zylindrischen Mantel und zwei einander abgewandten, dicht und fest mit dem Mantel verbundenen Endwänden. Die beiden zur Befestigung des ersten Schalldämpfers 21 dienenden Halter 28 stehen entlang dem Schalldämpfer in Abstand von einander und sind in der Nähe der beiden Enden des Schalldämpfers 21 an dessen Mantel befestigt.

Jeder der beiden Halter 28 ist beispielsweise gemäss den Figuren 5 sowie 6 ausgebildet und weist ein unmittelbar am Gehäuse 51 des ersten Schalldämpfers 21 angreifendes, starres, metallisches, beispielsweise aus rostfreiem Stahl bestehendes Halteorgan 61 sowie zwei das letztere mit dem Fahrzeugboden 4 verbindende, mindestens teilweise elastisch deformierbare Verbindungsorgane 62 auf. Das Halteorgan 61 ist länglich sowie rechtwinklig zum Schalldämpfer 21 angeordnet und besteht im wesentlichen aus einem U-Profilstab mit einem Steg 61a und zwei Schenkeln 61b. Der mittlere Abschnitt des Halteorgans 61 liegt an der unteren Seite des Schalldämpfer-Gehäuses an dessen Mantel an und ist beispielsweise durch einige Punkt-Schweissverbindungen am Mantel befestigt. Jedes Verbindungsorgan 62 besteht zum Beispiel aus einem einstückigen, gummielastischen Körper aus synthetischem und/oder natürlichen Gummi. Jedes Verbindungsorgan 62 ist zum Beispiel im wesentlichen rotationssymmetrisch zu einer zur Fahr-Ebene 9 ungefähr rechtwinkligen und also ungefähr vertikalen Achse 63 und hat einen kompakten, lochfreien Hauptabschnitt 62a. Dieser hat eine zur Achse 63 rotationssymmetrische Umfangsfläche 62b sowie an seinen beiden Enden ebene, ringförmige Auflage- und/oder Endflächen 62d und hängt im mittleren Bereich von jedem Ende mit einem in axialer Richtung von diesem wegragenden, ungefähr pilzförmigen Fortsatz zusammen, der Befestigungs- und/oder Verbindungsmittel 62e bildet. Die beiden zum gleichen Halter 28 gehörenden Verbindungsorgane 62 sind entlang dem Halteorgan 61 des betreffenden Halters gegeneinander versetzt und in der Nähe der Enden des Halteorgans 61 angeordnet. Jedes Verbindungsorgan liegt mit den ebenen Auflage- und/oder Endflächen 62d am Halteorgan 61 bzw. am Fahrzeugboden 4 an. Die das erste Gehäuse 51 mit dem Fahrzeugboden 4 verbindenden Halter 28 ermöglichen gewisse, aber in allen Richtungen nur relativ kleine Bewegungen des ersten Gehäuses 51, wie es schon in der Einleitung beschrieben wurde.

Die zum Halten des zweiten Gehäuses 52 des zweiten Schalldämpfers dienenden Halter 30 sind teilweise ähnlich wie die Halter 28 ausgebildet und weisen ebenfalls im wesentlichen aus stellenweise gebogenen, metallischen U-Profilstäben bestehende Halteorgane und mindestens zum Teil gummielastische Verbindungsorgane auf. Die Halteorgane der Halter 30 sind jedoch auf der oberen Seite des zweiten Gehäuses befestigt. Ferner sind die aus Gummi bestehenden Hauptabschnitte der Verbindungsorgane der Halter 30 nicht rotationssymmetrisch zu einer Achse, sondern ungefähr quaderförmig und derart angeordnet, dass das zweite Gehäuse 52 in vom restlichen Auspuff getrenntem Zustand durch eine an ihn angreifende Kraft, die ungefähr parallel zu einer durch die Zentren der beiden Gehäuse 51, 52 verlaufenden Gehäuse-Verbindungsgerade ist, wesentlich mehr aus seine Ruhelage ausgelenkt als durch eine gleich grosse Kraft, die zur Gehäuse-Verbindungsgeraden rechtwinklig ist und sonst eine beliebige Richtung hat.

Die Lage und die Richtung der virtuellen Dreh- und/oder Schwenk-Achse 10 können experimentell ermittelt werden. Hierzu kann man beispielsweise mindestens einen nicht gerade auf der virtuellen Achse liegenden Punkt des Motorgehäuses 6a und beispielsweise mindestens zwei, entlang der virtuellen Achse voneinander entfernte, nicht auf der letzteren liegende Punkte wählen sowie definieren und eventuell mit irgend einem Element, beispielsweise einem Zeichenstift oder einer sonstigen Spitze und/oder einem Reflektor oder dergleichen versehen. Wenn das Motorgehäuse beim Betrieb des Verbrennungsmotors infolge von Änderungen der Belastung bzw. Leistung des Motors mindestens annähernd Dreh- und/oder Schwenkbewegungen um die virtuelle Achse ausführt, bewegt sich der bzw. jeder gewählte, nicht auf der virtuellen Achse liegende Punkt mindestens annähernd entlang einer kreisbogenförmigen Bahn, die mit Hilfe von Detektionsmitteln ermittelt werden kann. Aus der Bahn bzw. den Bahnen kann dann die Lage der virtuellen Achse bestimmt werden.

Beim Betrieb des Verbrennungsmotors 6 werden durch die Vibrationen des Motorgehäuses und das pulsierende Abgas Schwingungen von verschiedenen Auspuffteilen angeregt. Die beiden flexiblen Leitungselemente 16, 18 entkoppeln die stromabwärts von ihnen angeordneten Auspuffteile schwingungsmässig mindestens teilweise vom Verbrennungsmotor.

Das Motorgehäuse 6a führt beim Betrieb des Verbrennungsmotors bei schnellen sowie grossen Motor-Leistungsänderungen Schwenkbewegungen um die virtuelle Dreh- und/oder Schwenkachse 10 aus, bei denen die Auslenkungen von der Mittelund/oder Ruhelage häufig ungefähr 2° bis 3° betragen. Das Motorgehäuse bewegt dann über die Einlass- und Sammelvorrichtung 13 sowie den Katalysator 14 den Eingang des ersten flexiblen Leitungselements 16 entlang einem Bogen hin und her, dessen Länge - abhängig vom Dreh- bzw. Schwenkwinkel und vom Abstand von der virtuellen Achse oft mindestens 3 cm und häufig bis ungefähr 10 cm oder noch mehr beträgt. Dagegen halten die Halter 28 das Gehäuse 51 des ersten Schalldämpfers und damit auch den Ausgang des zweiten flexiblen Leitungselements 18 schwingungsdämpfend, aber fast unbeweglich fest. Jedes der beiden flexiblen Leitungselemente 16 und 18 wird durch die Dreh- und/oder Schwenkbewegungen des Motorgehäuses entlang einer zur virtuellen Achse ungefähr rechtwinkligen Ebene deformiert, insbesondere gebogen. Dabei werden auch die von den flexiblen Leitungselementen definierten, ursprünglich geraden Leitungselement-Achsen 41, 43 in der betreffenden Ebene gebogen. Bei diesen Biegungen bleibt jede Leitungselement-Achse oder - genauer gesagt - eine sich an irgend eine Stelle von einer der Leitungselement-Achsen anschmiegende Tangente mindestens annähernd rechtwinklig zur virtuellen Achse.

Die Haltemittel 27 verbinden den Auspuff ausschliesslich stromabwärts von den flexiblen Leitungselementen mit dem Fahrzeugkörper, wenn man von der Verbindung des Auspuffkrümmers der Einlass- und Sammelvorrichtung 13 mit dem Motorgehäuse 6a absieht. Das die beiden flexiblen Leitungselemente 16, 18 miteinander verbindende Rohr 17 könnte sich daher an sich in mehr oder weniger beliebigen Richtungen bewegen. Wegen der Anordnung der flexiblen Leitungselemente und weil diese Biegewiderstände haben, die wesentlich kleiner als die Widerstände gegen Torsionen und Scherungen sind, führen der Ausgang des ersten flexiblen Leitungselements 16, das Rohr 17 und der Eingang des zweiten flexiblen Leitungselements 18 infolge der Dreh- und/oder Schwenkbewegungen sowie Vibrationen des Motorgehäuses praktisch nur Bewegungen parallel zu einer Ebene aus, die mindestens annähernd rechtwinklig zur virtuellen Achse ist.

Wenn das Motorgehäuse 6a Schwenkbewegungen ausführt wird auch das Leitungselement-Zentrum 42 des ersten flexiblen Leitungselements 16 ungefähr entlang einem Kreisbogen hin und her bewegt, dessen Zentrum auf der virtuellen Drehachse 10 liegt. Das Zentrum 42 wird also fast rechtwinklig zur Leitungselemente-Verbindungsgeraden 55 bewegt. Der Abstand der beiden Leitungselement-Zentren 42 und 44 wird daher bei den Verschwenkungen des Motorgehäuses höchstens geringfügig verändert. Dementsprechend werden die Wellenbälge der flexiblen Leitungselemente 16, 18 bei den Verschwenkungen des Motorgehäuses hin und her gebogen, ohne dass die Längen der Wellenbälge nennenswert geändert werden. Ferner bewirken die Verschwenkungen des Motorgehäuses auch praktisch keine Torsionen und Scherungen. Die flexiblen Leitungselemente 16, 18 haben daher eine hohe Lebensdauer.

Der Auspuff 12 wird durch das ihm beim Betrieb vom Verbrennungsmotor 6 zugeführte, heisse Abgas erhitzt. Die starren Teile des Auspuffs werden dabei durch die thermische Dehnung verlängert. Die thermisch verursachten Längenänderungen der stromaufwärts vom ersten Schalldämpfer 21 angeordneten, starren Auspuffteile werden mindestens zum grössten Teil durch die beiden elastisch deformierbaren, flexiblen Leitungselemente 16 und 18 ausgeglichen. Die Längen der Wellenbälge werden beim Ausgleichen der thermisch verursachten Längenänderungen eventuell vorübergehend unter einer elastischen Deformation verändert. Diese Längenänderungen erfolgen jedoch normalerweise seltener und langsamer als die Verschwenkungen des Motorgehäuses und haben daher praktisch keinen Einfluss auf die Lebensdauer der Wellenbälge.

Der das erste Gehäuses 51 mit dem zweiten Gehäuses 52 verbindende Auspuffteil ist mindestens im wesentlichen durch das gebogene Rohr 22 gebildet, enthält weder Wellenbälge noch sonstige deformierbare Leitungselemente und ist also im wesentlichen überall starr. Die durch das heisse Abgas verursachte Längenänderung des Rohrs 22 und die dadurch von letzteren erzeugte, die beiden Schalldämpfer-Gehäuse voneinander wegdrückende, relativ grosse Kraft bewirkt eine Biegung der gummielastischen Verbindungsorgane, insbesondere der beim zweiten Gehäuse 52 vorhandenen Verbindungsorgane. Die Verlängerung des Rohrs 22 wird daher mindestens zum grössten Teil durch eine elastische Biegung der letztgenannten Verbindungsorgane und eine Verschiebung bzw. Auslenkung des zweiten Gehäuses ausgeglichen.

Die Schalldämpfer haben von den stromabwärts des ersten deformierbaren Leitungselements 16 angeordneten Auspuffteilen die grösste Masse pro Längeneinheit. Die gummielastischen Verbindungsorgane der Halter 28, 30 verbinden die beiden Schalldämpfer zwar etwas beweglich sowie federnd mit dem Fahrzeugboden und sind bei kleinen Auslenkungen ausreichend nachgiebig, um eine gute Schwingungsdämpfung zu ergeben. Wie beschrieben, ermöglichen die Verbindungsorgane 62 der Halter 28 jedoch in allen Richtungen nur geringe Auslenkungen des ersten Schalldämpfers. Die Verbindungsorgane der Halter 30 halten Auslenkungen des zweiten Schalldämpfers insbesondere in allen zur erwähnten Gehäuse-Verbindungsgeraden rechtwinkligen Richtungen sehr klein und hemmen auch zur Gehäuse-Verbindungsgeraden parallele Verschiebungen. Die stromabwärts von den flexiblen Leitungselementen 16, 18 angeordneten Auspuffteile und insbesondere die beiden Schalldämpfer 21, 23 werden daher durch die beim normalen Betrieb vom Verbrennungsmotor erzeugten Vibrationen, die allenfalls vom pulsierenden Abgas angeregten Schwingungen, die durch Drehzahlund/oder Drehmomentänderungen verursachten Verschwenkungen des Motorgehäuses und die beim normalen Fahrbetrieb des Kraftfahrzeugs durch Bodenunebenheiten, Kurven, Beschleunigungs- und Bremsvorgänge erzeugten Beschleunigungen höchstens wenig aus ihren Mittellagen ausgelenkt, die sie nach Erreichen der Betriebstemperaturen infolge der thermischen Abmessungsänderungen einnehmen. All diese mechanisch verursachten Auslenkungen sind deutlich kleiner als die durch Verschwenkungen des Motorgehäuses verursachten Bewegungen des Eingangs des ersten flexiblen Leitungselements und betragen in allen Richtungen höchstens 5 mm, vorzugsweise höchstens 2 mm, normalerweise höchstens 1 mm oder sogar nur höchstens 0,5 mm sowie meistens höchstens 0,1 mm.

Die stromabwärts des Katalysators 14 und insbesondere des ersten elastisch deformierbaren Leitungselements 16 angeordneten Rohre brauchen keine grossen durch die Vibrationen oder das Fahren verursachten Beschleunigungen und Kräfte aufzunehmen. Die Rohre 17, 22 und 24 brauchen daher im wesentlichen nur ihr eigenes Gewicht und eventuell noch teilweise das Gewicht der elastisch deformierbaren Leitungselemente 16, 18 zu tragen. Es ist daher nicht nötig die Rohre 22, 24 durch unmittelbar an ihnen selbst angreifende Halter am Fahrzeugkörper zu halten. Die Rohre 17, 22, 24, die Schalldämpfer-Gehäuse und die in den Schalldämpfern vorhandenen Rohre können zudem dünnwandig und leicht gemacht werden.

Das zum Teil in Fig. 7 ersichtliche Kraftfahrzeug 101, besteht wieder aus einem Personenkraftwagen, besitzt einen Fahrzeugkörper 102 mit einer Karosserie 103, einem Fahrzeugboden 104 und eventuell einem Gestell 105 sowie einen Verbrennungsmotor 106 mit einem Motorgehäuse 106a und einer Motorwelle 106b. Diese ist um eine Motor-Drehachse 106c drehbar. Das Motorgehäuse 106a ist mit Haltemitteln 108 beweglich am Gestell 105 gehalten. Das Kraftfahrzeug steht auf einer Fahr-Ebene 109. Das Motorgehäuse führt bei Verschwenkungen um eine virtuelle Dreh- und/oder Schwenk-Achse 110 aus. Das Fahrzeug hat ferner eine Abgasanlage 111 mit einem Auspuff 112. Dieser weist - beginnend beim Motor - entlang dem Abgas-Strömungsweg der Reihe nach eine Einlass- und Sammelvorrichtung 113 mit einem Auspuffkrümmer und einem gemeinsamen Ausgang, eine Verbindung 115, ein erstes elastisch deformierbares, flexibles Leitungselement 116, ein starres Rohr 117 ein zweites elastisch deformierbares, flexibles Leitungselement 118, eine Verbindung 119, einen Katalysator 120, eine Verbindung 121, einen Schalldämpfer 122 und beispielsweise noch einen nicht mehr sichtbaren zweiten Schalldämpfer sowie zusätzliche Rohre auf. Der Katalysator 120, der Schalldämpfer 122 und der nicht sichtbare Schalldämpfer sind mit Haltemitteln 127 am Fahrzeugboden 104 gehalten.

Die beiden flexiblen Leitungselemente 116 und 118 haben eine Leitungselement-Achse 141 bzw. 143 und ein Leitungselement-Zentrum 142 bzw. 144. Jede Leitungselement-Achse 141, 143 verläuft wiederum möglichst genau rechtwinklig zur virtuellen Achse 110. Die beiden Leitungselemente 116, 118 definieren eine Leitungselemente-Verbindungsgerade 155, die durch die beiden Leitungselemente, nämlich mindestens annähernd durch deren Zentren 142 bzw. 144 verläuft und die virtuelle Achse 110 in mindestens einem Zustand mindestens annähernd kreuzt.

Die Motor-Drehachse 106c ist wiederum rechtwinklig zur Fahrzeug-Längsrichtung. Die Abgasauslässe des Motorgehäuses 106a sind jedoch dem frontseitigen Ende des Fahrzeugs zugewandt. Die beiden Leitungselemente 116, 118 befinden sich daher beispielsweise auf verschiedenen Seiten einer zur Fahr-Ebene 9 senkrechten und durch die virtuelle Achse 110 verlaufenden Ebene. Die beiden Zentren 142, 144 befinden sich dementsprechend auf der Geraden 155 auf verschiedenen Seiten der virtuellen Achse 110.

Der Auspuff 112 unterscheidet sich vom Auspuff 12 zudem dadurch, dass der Katalysator 120 das erste stromabwärts von den flexiblen Leitungselementen 116, 118 angeordnete, mit Haltemitteln am Fahrzeugkörper gehaltene Gehäuse 151 aufweist. Der Schalldämpfer 122 bildet dann das zweite Gehäuse 152 und der nicht sichtbare, zweite Schalldämpfer das dritte Gehäuse. Soweit vorgängig nichts anderes geschrieben wurde, sind das Kraftfahrzeug 101 und dessen Abgasanlage 111 ähnlich ausgebildet wie das Kraftfahrzeug 1 bzw. die Abgasanlage 11 und haben dementsprechend auch ähnliche Eigenschaften.

Die Kraftfahrzeuge und Auspuffe können auf verschiedene Arten geändert werden. Zum Beispiel können die flexiblen Leitungselemente eventuell schon ein wenig gebogene Achsen haben, wenn sich der Motor im Ruhezustand befindet und/oder wenn der Motor sowie der Auspuff beim Betrieb die Betriebstemperaturen erreicht haben und das Motorgehäuse bei konstanter Leistung eine Mittellage einnimmt. In diesen Fällen soll jede schon im Ruhezustand gebogene Leitungselement-Achse mindestens annähernd und vorzugsweise möglichst genau in einer zur virtuellen Dreh- und/oder Schwenk-Achse rechtwinkligen Ebene liegen, so dass jeder Abschnitt einer solchen Achse möglichst genau rechtwinklig zur virtuellen Achse ist. Ferner können dann die sich bei den Leitungselement-Zentren an die gebogenen Leitungselement-Achsen anschmiegenden Tangenten einen Winkel von mindestens 30° miteinander bilden.

Es können auch Merkmale von den Kraftfahrzeugen 1, 101 und deren Abgasanlagen 11, 111 miteinander kombiniert werden. Des weitern können die an den Mänteln der Gehäuse angreifenden Halter 27, 28, 127, 128 durch je einem Gehäuse zugeordnete Paare von Haltern ersetzt werden, die in der Nähe der Enden des betreffenden Gehäuses an mit diesem verbundenen Rohren und/der Muffen oder dergleichen angreifen. Ferner können die Verbindungsorgane der verschiedenen Halter aus Verbundkörpern gebildet werden, die zusätzlich zu einem aus Gummi bestehenden Teil metallische Befestigungs- und/oder Verbindungsmittel aufweisen. Die Verbindungsorgane können zudem einen anders geformten, gummielastischen Hauptabschnitt haben, der beispielsweise noch mit einem zur Längsrichtung des zugeordneten Gehäuses parallelen, durchgehenden Loch versehen ist. Des weiteren kann der Auspuff einen kombinierten Katalysator-Schalldämpfer aufweisen, dessen Gehäuse das erste stromabwärts von den flexiblen Leitungselementen angeordnete Gehäuse bildet.

Schliesslich wird noch auf die EP 0 875 409 A sowie die EP 0 875 410 A verwiesen, deren Inhalt hiermit in die vorliegende Patentanmeldung einbezogen wird, soweit sich keine Widersprüche ergeben.

## Patentansprüche

1. Abgasanlage für ein Kraftfahrzeug (1, 101), das einen Fahrzeugkörper (2, 102) und einen Verbrennungsmotor (6, 106) mit einem am Fahrzeugkörper (2, 102) gehaltenen Motorgehäuse (6a, 106a) aufweist, mit einem mit dem Verbrennungsmotor (6, 106) verbindbaren Auspuff (12, 112), der mindestens ein flexibles Leitungselement (16, 18, 116, 118) mit einer Leitungselement-Achse (41, 43, 141, 143) und mindestens ein stromabwärts vom mindestens einen flexiblen Leitungselement (16, 18, 116, 118) angeordnetes, zu einem Katalysator (120) und/oder Schalldämpfer (21, 23, 122) gehörendes Gehäuse (51, 52, 151, 152, 153) aufweist, wobei das bzw. jedes flexible Leitungselement (16, 18, 116, 118) einen biegbaren Wellenbalg (33) aufweist und dass Haltemittel (27, 127) vorhanden sind, um den Auspuff (12, 112) stromabwärts vom mindestens einen flexiblen Leitungselement (16, 18, 116, 118) mit dem Fahrzeugkörper (2, 102) zu verbinden und das bzw. das erste stromabwärts vom mindestens einen flexiblen Leitungselement (16, 18, 116, 118) angeordnete Gehäuse (51, 151) derart schwingungsdämpfend zu halten, dass dieses Gehäuse (51, 151) bei zusammengebautem Auspuff (12, 112) und/oder in vom restlichen Auspuff (12, 112) getrenntem Zustand durch eine auf das Gehäuse (51, 151) einwirkende, konstante Kraft von 100 N in jeder beliebigen Richtung bezüglich des Fahrzeugkörpers (2, 102) höchstens 5 mm aus einer Mittel- und/oder Ruhelage ausgelenkt wird, **dadurch gekennzeichnet, dass** die Leitungselement-Achse (41, 43, 141, 143) des mindestens einen flexiblen Leitungselements (16, 18, 116, 118) mindestens in einem Zustand des letzteren einen Winkel von 85° bis 95° mit einer virtuellen Achse (10, 110) bildet, um die das Motorgehäuse (6a, 106a) bei Leistungsänderungen des Verbrennungsmotors (6, 106) Verschwenkungen bezüglich des Fahrzeugkörpers (2, 102) ausführt.

2. Abgasanlage nach Anspruch 1, **dadurch gekennzeichnet, dass** das mindestens eine flexible Leitungselement (16, 18, 116, 118) einen Eingang hat, dass der Auspuff (12, 112) ausgebildet ist, um den Eingang des bzw. eines flexiblen Leitungselements (16, 18, 116, 118) im wesentlichen starr mit dem Motorgehäuse (6a, 106a) zu verbinden, und dass die Haltemittel (27) ausgebildet sind, um den Auspuff (12, 112) ausschliesslich stromabwärts vom mindestens einen flexiblen Leitungselement (16, 18, 116, 118) am Fahrzeugkörper (2, 102) zu halten.

3. Abgasanlage nach Anspruch 1 oder 2, **dadurch gekennzeichnet, dass** ein erstes und ein zweites flexibles Leitungselement (16, 18, 116, 118) mit je einem Eingang und einem Ausgang vorhanden sind, dass der Ausgang des ersten flexiblen Leitungselements (16, 116) über ein Rohr (17, 117) im wesentlichen starr mit dem Eingang des zweiten flexiblen Leitungselements (18, 118) verbunden ist und dass der Ausgang des letzteren im wesentlichen starr mit dem genannten Gehäuse (51, 151) eines Katalysators (120) und/oder Schalldämpfers (21) verbunden ist.

4. Abgasanlage nach Anspruch 3, **dadurch gekennzeichnet, dass** das erste und das zweite flexible Leitungselement (16, 18, 116, 118) je ein Zentrum (42, 44, 122, 144) haben und eine durch die beiden Zentren (42, 44, 142, 144) verlaufende Gerade (55, 155) definieren, welche die virtuelle Achse (10, 110) mindestens in einem Zustand des Verbrennungsmotors (6, 106) und Auspuffs (12, 112) mindestens annähernd kreuzt.

5. Abgasanlage nach Anspruch 3 oder 4, **dadurch gekennzeichnet, dass** der Auspuff (12, 112) zwischen den beiden flexiblen Leitungselementen (16, 18, 116, 118) frei von Gehäusen und frei von Verbindungen mit dem Fahrzeugkörper (2, 102) und Motorgehäuse (6a, 106a) ist.

6. Abgasanlage nach einem der Ansprüche 1 bis 5, **dadurch gekennzeichnet, dass** die Haltemittel (27, 127) ausgebildet sind, um das bzw. das erste stromabwärts vom mindestens einen flexiblen Leitungselement (16, 18, 116, 118) angeordnete Gehäuse (51, 151) derart am Fahrzeugskörper (2, 102) zu halten, dass dieses Gehäuse (51, 151) bei zusammengebautem Auspuff (12, 112) und/oder in vom restlichen Auspuff (12, 112) getrenntem Zustand durch eine auf das Gehäuse (51, 151) einwirkende, konstante Beschleunigung von 10 m/s² oder eine konstante Kraft von 100 N in jeder beliebigen Richtung bezüglich des Fahrzeugkörpers (2, 102) höchstens 2 mm und beispielsweise höchstens 1 mm aus der Mittel- und/oder Ruhelage ausgelenkt wird.

7. Abgasanlage nach einem der Ansprüche 1 bis 6, **dadurch gekennzeichnet, dass** der von der Leitungselement-Achse (41, 43, 141, 143) mit der virtuellen Achse (10, 110) gebildete Winkel 87° bis 93° und beispielsweise 89° bis 91° beträgt.

8. Kraftfahrzeug mit einer Abgasanlage (12, 112) nach einem der Ansprüche 1 bis 7 und mit einem einen Fahrzeugkörper (2, 102), einem ein Motorgehäuse (6a, 106a) aufweisenden Verbrennungsmotor (6, 106) und mit Haltemitteln (8, 108, 27, 127), die den Verbrennungsmotor (6, 106) und den Auspuff (12, 112) am Fahrzeugkörper (2, 102) halten, **dadurch gekennzeichnet, dass** die Leitungselement-Achse (41, 43, 141, 143) des mindestens einen flexiblen Leitungselements (16, 18, 116, 118) im genannten, mindestens einen Zustand mit der virtuellen Achse (10, 110) einen Winkel von 85° bis 95° bildet.

9. Kraftfahrzeug nach Anspruch 8, **dadurch gekennzeichnet, dass** die virtuelle Achse (10, 110) mit der Längsrichtung des Kraftfahrzeugs einen von 90° abweichenden Winkel bildet und dass die Leitungselement-Achse (41, 43, 141, 143) einen von 90° verschiedenen Winkel mit einer Motor-Drehachse (6c, 106c) bildet, um die eine Motorwelle (6b, 106b) des Verbrennungsmotors (6, 106) drehbar ist.

## Claims

1. Exhaust system for a motor vehicle (1, 101) which has a vehicle body (2, 102) and an internal combustion engine (6, 106) with an engine casing (6a, 106a) held on the vehicle body (2, 102), having an exhaust (12, 112) which can be connected to the internal combustion engine (6, 106) and has at least one flexible pipe member (16, 18, 116, 118) with a pipe member axis (41, 43, 141, 143) and at least one casing (51, 52, 151, 152, 153) arranged downstream of at least one flexible pipe member (16, 18, 116, 118) and belonging to a catalytic converter (120) and/or silencer (21, 23, 122), the or each flexile pipe member (16, 18, 116, 118) having a flexible bellows (33) and retaining means (27, 127) being present for connecting the exhaust (12, 112) downstream of the at least one flexible pipe member (16, 18, 116, 118) to the vehicle body (2, 102) and for keeping the or the first casing (51, 151) arranged downstream of the at least one flexible pipe member (16, 18, 116, 118) vibration-damped in such a way that, in the assembled exhaust (12, 112) and/or in a state separated from the remaining exhaust (12, 112), this casing (51, 151) is deflected by a constant force of 100 N acting on the casing (51, 151) in any desired direction relative to the vehicle body (2, 102) by at most 5 mm from the middle and/or rest position, **characterized in that** the pipe member axis (41, 43, 141, 143) of the at least one flexible pipe member (16, 18, 116, 118), at least in one state of the latter, makes angle of 85° to 95° with a virtual axis (10, 110) about which the engine casing (6a, 106a) executes swings relative to the vehicle body (2, 102) in the case of power changes of the internal combustion engine (6, 106).

2. Exhaust system according to Claim 1, **characterized in that** the at least one flexible pipe member (16, 18, 116, 118) has an entrance, that the exhaust (12, 112) is formed to connect the entrance of the or of a flexible pipe member (16, 18, 116, 118) substantially rigidly to the engine casing (6a, 106a), and that the retaining means (27) are formed for holding the exhaust (12, 112) on the vehicle body (2, 102) exclusively downstream of the at least one flexible pipe member (16, 18, 116, 118).

3. Exhaust system according to Claim 1 or 2, **characterized in that** a first and a second flexible pipe member (16, 18, 116, 118), each having an entrance and an exit, are present, that the exit of the first flexible pipe member (16, 116) is connected by means of a pipe (17, 117) substantially rigidly to the entrance of the second flexible pipe member (18, 118) and that the exit of the latter is connected substantially rigidly to said casing (51, 151) of a catalytic converter (120) and/or of a silencer (21).

4. Exhaust system according to Claim 3, **characterized in that** the first and the second flexible pipe member (16, 18, 116, 118) each have a centre (42, 44, 142, 144) and define a straight line (55, 155) which passes through the two centres (42, 44, 142, 144) and at least approximately intersects the virtual axis (10, 110) at least in one state of the internal combustion engine (6, 106) and exhaust (12, 112).

5. Exhaust system according to Claim 3 or 4, **characterized in that** the exhaust (12, 112) is free of casings and free of connections to the vehicle body (2, 102) and engine casing (6a, 106a) between the two flexible pipe members (16, 18, 116, 118).

6. Exhaust system according to any of Claims 1 to 5, **characterized in that** the retaining means (27, 127) are formed for holding the or the first casing (51, 151) arranged downstream of the at least one flexible pipe member (16, 18, 116, 118), in such a way on the vehicle body (2, 102) that this casing (51, 151), in the assembled exhaust (12, 112) and/or in the state separated from the remainder of the exhaust (12, 112), is deflected at most 2 mm and, for example, at most 1 mm from the middle and/or rest position by a constant acceleration of 10 m/s² acting on the casing (51, 151) or a constant force of 100 N in any direction relative to the vehicle body (2, 102).

7. Exhaust system according to any of Claims 1 to 6, **characterized in that** the angle formed by the pipe member axis (41, 43, 141, 143) with the virtual axis (10, 110) is 87° to 93° and, for example, 89° to 91°.

8. Motor vehicle having an exhaust system (12, 112) according to any of Claims 1 to 7 and having a vehicle body (2, 102) and an internal combustion engine (6, 106) having an engine casing (6a, 106a), and having retaining means (8, 108, 27, 127) which hold the internal combustion engine (6, 106) and the exhaust (12, 112) on the vehicle body (2, 102), **characterized in that** the pipe member axis (41, 43, 141, 143) of the at least one flexible pipe member (16, 18, 116, 118) makes an angle of 85° to 95° with the virtual axis (10, 110) in said at least one state.

9. Motor vehicle according to Claim 8, **characterized in that** the virtual axis (10, 110) makes an angle differing from 90°, with the longitudinal direction of the motor vehicle and that the pipe member axis (41, 43, 141, 143) makes an angle differing from 90° with an axis of rotation (6c, 106c) of the engine, about which an engine shaft (6b, 106b) of the internal combustion engine (6, 106) is rotatable.

## Revendications

1. Système d'échappement pour un véhicule à moteur (1, 101) qui présente un corps de véhicule (2, 102) et un moteur à combustion interne (6, 106) avec un carter de moteur (6a, 106a) fixé au corps de véhicule (2, 102), avec un pot d'échappement (12, 112) pouvant être relié au moteur à combustion interne (6,106), qui présente au moins un élément de tuyau flexible (16, 18, 116, 118) avec un axe (41, 43, 141, 143) et au moins un carter (51, 52, 151, 152, 153) faisant partie d'un pot catalytique ou catalyseur (120) et/ou d'un silencieux (21, 23, 122) et placé en aval d'au moins un élément de tuyau flexible (16, 18, 116, 118), sachant que l'élément ou chaque élément de tuyau flexible (16, 18, 116, 118) présente un soufflet flexible (33) et que des moyens de fixation (27, 127) sont prévus pour relier le pot d'échappement (12, 112) au corps du véhicule (2, 102) en aval d'au moins un élément de tuyau flexible (16, 18, 116, 118), et pour fixer le carter ou le premier carter (51, 151) placé en aval d'au moins un élément de tuyau flexible (16, 18, 116, 118) tout en amortissant les vibrations, de telle manière qu'une force constante de 100 N s'exerçant sur le carter (51, 151) dans n'importe quelle direction par rapport au corps du véhicule (2, 102) fasse dévier ce carter (51, 151) de 5 mm au maximum d'une position centrale et/ou de repos lorsque le pot d'échappement (12, 112) est assemblé et/ou lorsque ledit carter est séparé du reste du pot d'échappement (12, 112), **caractérisé en ce que** l'axe (41, 43, 141, 143) dudit au moins un élément de tuyau flexible (16, 18, 116, 118) forme, au moins dans un état de ce dernier, un angle compris entre 85° et 95° avec un axe virtuel (10, 110) autour duquel le carter du moteur (6a, 106a) pivote par rapport au corps du véhicule (2, 102) lors de variations de régime du moteur à combustion interne (6, 106).

2. Système d'échappement selon la revendication 1, **caractérisé en ce qu'**au moins l'unique élément de tuyau flexible (16, 18, 116, 118) possède une entrée, **en ce que** le pot d'échappement (12, 112) est conçu pour relier l'entrée du ou d'un élément de tuyau flexible (16, 18, 116, 118) au carter du moteur (6a, 106a) de façon essentiellement rigide, et **en ce que** les moyens de fixation (27) sont conçus pour fixer le pot d'échappement (12, 112) au corps de véhicule (2, 102) uniquement en aval d'au moins un élément de tuyau flexible (16, 18, 116, 118).

3. Système d'échappement selon la revendication 1 ou 2, **caractérisé en ce que** sont prévus un premier et un second élément de tuyau flexible (16, 18, 116, 118) munis chacun d'une entrée et d'une sortie, **en ce que** la sortie du premier élément de tuyau flexible (16, 116) est reliée essentiellement de façon rigide, par l'intermédiaire d'un tuyau (17, 117) à l'entrée du second élément de tuyau flexible (18, 118), et **en ce que** la sortie de ce dernier est reliée essentiellement de façon rigide au carter cité (51, 151) d'un pot catalytique (120) et/ou d'un silencieux (21).

4. Système d'échappement selon la revendication 3, **caractérisé en ce que** le premier et le second élément de tuyau flexible (16, 18, 116, 118) possèdent chacun un centre (42, 44, 142, 144) et défmissent une droite (55, 155) passant par les deux centres (42, 44, 142, 144), que l'axe virtuel (10, 110) coupe au moins approximativement au moins dans un état du moteur à combustion interne (6, 106) et du pot d'échappement (12, 112).

5. Système d'échappement selon la revendication 3 ou 4, **caractérisé en ce qu'**entre les deux éléments de tuyau flexibles (16, 18, 116, 118), le pot d'échappement (12, 112) est exempt de carters et de liaisons avec le corps du véhicule (2, 102) et le carter du moteur (6a, 106a).

6. Système d'échappement selon l'une des revendications 1 à 5, **caractérisé en ce que** les moyens de fixation (27, 127) sont conçus pour fixer le carter ou le premier carter (51, 151) situé en aval d'au moins un élément de tuyau flexible (16, 18, 116, 118) au corps du véhicule (2, 102) de telle manière qu'une accélération constante de 10 m/s² ou une force constante de 100 N agissant sur le carter (51, 151) dans n'importe quelle direction par rapport au corps du véhicule (2, 102) fasse dévier ce carter (51, 151) de 2 mm au maximum, et par exemple de 1 mm au maximum, d'une position centrale et/ou de repos, lorsque le pot d'échappement (12, 112) est assemblé et/ou lorsque ledit carter est séparé du reste du pot d'échappement (12, 112).

7. Système d'échappement selon l'une des revendications 1 à 56, **caractérisé en ce que** l'angle formé par l'axe (41, 43, 141, 143) des éléments de tuyau et l'axe virtuel (10, 110) est compris entre 87° et 93°, et par exemple entre 89° et 91°.

8. Véhicule à moteur doté d'un système d'échappement (12, 112) selon l'une des revendications 1 à 7, et comprenant un corps de véhicule (2, 102), un moteur à combustion interne (6, 106) présentant un carter de moteur (6a, 106a), et des moyens de fixation (8, 108, 27, 127) qui fixent le moteur à combustion interne (6, 106) et le pot d'échappement (12, 112) au corps du véhicule (2, 102), **caractérisé en ce que** l'axe (41, 43, 141, 143) d'au moins un élément de tuyau (16, 18, 116, 118) forme avec l'axe virtuel (10, 110) dans au moins l'unique état cité un angle compris entre 85° et 95°.

9. Véhicule à moteur selon la revendication 8, **caractérisé en ce que** l'axe virtuel (10, 110) forme avec la direction longitudinale du véhicule à moteur un angle différent de 90°, et **en ce que** l'axe (41, 43, 141, 143) des éléments de tuyau forme un angle différent de 90° avec un axe de rotation (6c, 106c) du moteur autour duquel tourne un arbre moteur (6b, 106b) du moteur à combustion interne (6, 106).
